# EUROPÄISCHE PATENTSCHRIFT

(11) **EP 2 448 823 B1**
(45) Veröffentlichungstag und Bekanntmachung des Hinweises auf die Patenterteilung: **30.04.2014**
(21) Anmeldenummer: 10723519.4
(22) Anmeldetag: 21.05.2010
(51) Int. Cl.: B65B 21/12, B67C 3/24, B67C 7/00, B65G 47/91, B65G 17/32, B65G 47/84

(54) **BEHANDLUNGS- UND TRANSPORTMASCHINE FÜR BEHÄLTER MIT EINEM SAUGGREIFER FÜR PET-FLASCHEN**
TREATMENT AND TRANSPORT MACHINE FOR CONTAINERS COMPRISING A SUCTION GRIPPER FOR PET BOTTLES
MACHINE DE TRAITEMENT ET DE TRANSPORT POUR RECIPIENTS COMPRENANT UNE TETE DE PREHENSION PAR ASPIRATION POUR BOUTEILLES EN PET

(30) Priorität: 01.07.2009 DE 102009031435
(43) Veröffentlichungstag der Anmeldung: 09.05.2012
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2010/003148
(87) Internationale Veröffentlichungsnummer: WO 2011/000450

(56) Entgegenhaltungen:
- DE-A1- 2 729 747
- DE-A1- 19 549 454
- DE-A1-102005 002 715
- DE-C2- 2 706 765

## Beschreibung

Die Erfindung betrifft eine Behandlungs- und Transportmaschine für Behälter, die zumindest ein Greifelement zum Halten oder Greifen des Behälters aufweist, wobei der Behälter einen Bauchbereich, kopfseitig eine verschließbare Mündungsöffnung und einen Halsbereich aufweist.

Derartige Behälter können beispielsweise als Flaschen für Flüssigkeiten, beispielsweise für Getränke verwendet werden. Die Behälter, zum Beispiel Flaschen, können aus einem transparenten oder transluzenten Material, beispielsweise aus Glas oder bevorzugt aus einem transluzenten Kunststoff, zum Beispiel PET bestehen. Denkbar ist aber auch, dass die Behälter aus anderen Materialien bestehen und mit anderen Füllgütern befüllbar sind.

Die Behandlung- und Transportmaschine dient dazu, die Behälter, beispielsweise PET-Flaschen der Getränkeindustrie einer Behälterbehandlungsänlage beispielsweise einer Getränkefüllanlage, einer Etikettieranlage oder aber auch einer Inspektionseinrichtung zuzuführen, wobei die Behendlungs- und Transportmaschine auch als eine solche der zuvor genannten Einrichtungen oder auch als Zuführstern ausgeführt sein kann. Die Behälter werden dabei an ihrem Kopfbereich, im Falle der PET-Flaschen an einem umlaufenden Kragen gehalten und unterhalb der Flaschenöffnung, also an ihrem Halsbereich von Greifelementen gegriffen.

Derartige Greifelemente sind z.B. als mechanisch wirkende Greifklammer bekannt, wobei die Greifkraft mechanisch aber auch mittels Magneten erzeugt werden kann.

Die DE 10 2005 014 838 A1 betrifft eine Klammer zum Halten von Gefäßen, insbesondere Flaschen in Gefäßtransport- und -behandlungsmaschinen, mit mindestens zwei Klammerarmen, die zum Öffnen und Schließen relativ zueinander beweglich sind, wobei jeder Klammerarm einen Greifarm und mindestens ein Klammerarm einen Gegenarm aufweist. Der Klammerarm, der Greifarm und Gegenarm aufweist, ist einstückig ausgebildet, wobei der Greifarm formstabil und der Gegenarm formelastisch ausgebildet ist. Damit soll eine Klammer zum Halten von Gefäßen bereitgestellt werden, welche die nötige Zentrierung der Gefäße ermöglicht, wobei gleichzeitig Gefäßdurchrnessertoleranzen ausgeglichen werden könnten. Weiterhin ist aus der DE 27 29 747 A1 ein Transportstern bekannt, bei welchem in festen Sterntaschen napfartige Saugelemente angeordnet sind, welche über eine Saugleitung mit einer Drucksenke verbunden sind. Die DE 195 49 454 A1 offenbart einen vakuumbeaufschlagten Bauchgreifer, der an einem Schwenkkopf für die liegende Flaschenstapelung angeordnet ist.

Die DE 10 2005 041 929 A1 befasst sich ebenfalls mit einem Greifer für Behälter, insbesondere für Flaschen in Behältertransportsystemen oder Behälterbehandlungsmaschinen, mit mindestens zwei relativ zueinander beweglichen Greifarmen, die durch magnetisch zusammenwirkende Permanentmagneten in Greifrichtung beaufschlagt sind. Es sind gleichzeitig einander abstoßende und einander anziehende Permanentmagneten derart ausgebildet und durch die Arbeitsbewegung des Greifers relativ zueinander bewegbar angeordnet, dass die in Greifrichtung auf die Greifarme wirkende Summe der Abstoß- und Anzugskräfte innerhalb eines vorbestimmten, unterschiedliche Behälter Greifgrößen abdeckenden Greifbereichs im Wesentlichen konstant ist.

Eine Vorrichtung zum Greifen von Behältern und insbesondere von Flaschen mit einem Träger, einer ersten an dem Träger angeordneten Greifeinrichtung mit einem in Richtung eines Außenumfangs des Behälters bewegbaren ersten Greifelements um das Behältnis an einem Außenumfang zu greifen offenbar die DE 10 2007 037 228 A1. Die Vorrichtung weist eine zweite an dem Träger angeordnete Greifeinrichtung auf, die wenigstens abschnittsweise in eine Mündung des Behälters einführbar ist, wobei die zweite Greifeinrichtung ein zweites Greifelement aufweist, das in Richtung eines Innenumfangs des Behältnisses bewegbar ist, um das Behältnis von innen zu greifen. Mit einer solchen Vorrichtung sollen insbesondere Flaschen mit Bügelverschlüssen gegriffen werden können. Je nach dem in welcher Position der Bügelverschluss angeordnet ist, greift entweder das erste Greifelement oder das zweite Greifelement.

Auch die DE 198 08 058 A1 offenbart einen Flaschengreifer bzw. eine Greifvorrichtung für Flaschen, mit zwei Greifarmen, die mit einem Steuernocken in eine Halteposition oder Löseposition bringbar sind, indem der Steuernocken mit einer an jedem Greifarm ausgebildeten Anlagefläche zusammenwirkt. Die Anlagefläche ist jeweils Bestandteil eines elastischen Kissens, das an dem jeweiligen Greifarm angeordnet ist.

Eine in der Praxis bewährte Greifvorrichtung für Flaschen mit zwei Greifarmen, die mittels einer Antriebsvorrichtung zwischen einer die Flaschen zwischen sich festhaltenden Greifstellung und einer die Flasche freigebenden Spreizstellung relativ zueinander schwenkbar sind, wobei durch die Antriebsvorrichtung an einem auf die Greifarme einwirkenden Antriebsteil ein vorbestimmter, konstanter Verstellweg vorgegeben ist, offenbart die DE 198 30 456 B4. Die Greifarme sind vorteilhaft unter Zwischenschaltung zumindest eines elastisch verformbaren Pufferelementes mit dem Antriebsteil gekoppelt, wobei das Antriebsteil unter Belassung eines Zwischenraums in eine Ausnehmung eines Greifarms eingreift und, wobei das Pufferelement den Zwischenraum zumindest teilweise ausfüllt.

Auch das Deutsche Gebrauchsmuster DE 20 2005 002 924 U1 offenbart einen Klammergreifer für ein Gefäßtransportsystem, insbesondere für ein Flaschentransportsystem mit zwei Greifarmen, wobei auch hier ein Kraftspeicher mit mindestens ein Paar einander abstoßender Permanentmagneten vorgesehen ist.

Gemäß den Figuren der SU 1007968 A befasst sich diese ebenfalls mit einem magnetisch wirkenden Greifsystem, wobei ein Magnet gleichpolig in einen anderen Magneten eingeschoben wird, so dass hier aufgrund magnetischer Abstoßung ein Greifbereich betätigt wird.

Die US 6,386,609 B1 befasst sich ebenfalls mit einer Greifeinrichtung, wobei auch hier Magneten vorgesehen sind. Allerdings sollen mit dieser Greifeinrichtung nicht Behälter sondern Unterlegscheiben gegriffen werden. Auch in der DE 26 57 992 ist eine Greifeinrichtung offenbart, welche an Kalibrierpressen angeordnet ist.

Bekannte Behälter, insbesondere PET-Flaschen weisen an Ihrem Mündungsbereich ein Außengewinde auf, auf dem beispielsweise ein Schraubdeckel aufschraubbar ist. Denkbar sind aber auch prellbare Verschlüsse. Um dem Verbraucher anzuzeigen, dass die PET-Flasche hinreichend versiegelt, also vor dem ersten Gebrauch noch nicht geöffnet wurde, weisen die PET-Flaschen bzw. die Schraubverschlüsse sogenannte Erstöffnungsgarantien auf. Bei einer unzerstörten Erstöffnungsgarantie kann der Verbraucher davon ausgehen, dass der Behälter bzw. dessen Verschluss noch nicht geöffnet wurde, der Behälter vollständig gefüllt, und sein Inhalt nicht verunreinigt ist.

Die Erstöffnungsgarantie des Schraubverschlusses bzw. das Garantieband legt sich dabei in eine unterhalb des Schraubgewindes angeordnete Sicherungsnut.

Es ist zu erwarten, dass in Zukunft vermehrt PET-Flaschen ohne Sicherungsnut in Verkehr gebracht werden, weil dadurch Gewicht und somit erhebliche Materialkosten eingespart werden können. Die Aufgabe der Sicherungsnut muss dann von einem Ringflansch, dem so genannten Neckring übernommen werden, d. h. das Garantieband, also die Erstöffnungsgarantie ragt bei einer solchen Ausgestaltung über den Neckring.

Der Neckring kann beispielsweise dazu dienen, die Flaschen im Verkaufsraum an geeigneten Aufhängungsvorrichtungen aufzuschieben, wobei die Hauptfunktion des Neckrings für einen Transport in Behandlungs- und/oder Transportmaschinen für Behälter anzusehen ist. Würde nun aus Gewichtsersparnisgründen und somit aus Kostenersparnisgründen der Neckring entfallen, so dass sogenannte neckringlose Flaschen vorlägen, müsste die vorhandene Sicherungsnut die Funktion des Neckrings übernehmen.

Gleich ob PET-Flaschen zum Beispiel ohne Sicherungsnut oder Beispielsweise ohne Neckring ausgeführt werden, steht für das Flaschenhandling nur noch eine Ebene zur Verfügung, auf welcher die Greifelemente die Flaschen halten können.

Von daher liegt der Erfindung die Aufgabe zugrunde, eine Behandlungsund Transportmaschine für Behälter, insbesondere deren Greifelemente mit einfachen Mitteln so zu verbessern, dass auch neckringlose Flaschen bzw. Behälter oder Behälter ohne Sicherungsnut auch bei rotierender Bewegung sicher transportiert werden können.

Erfindungsgemäß wird die Aufgabe durch eine Behandlungs- und Transportmaschine mit den Merkmalen des Anspruchs 1 gelöst.

Zweckmäßiger Weise greift das Greifelement an dem Halsbereich unterhalb der Mündungsöffnung des Behälters an.

Das Greifelement weist einen Stegbereich auf, der in einen Greifbereich übergeht. Der Sauggreifer ist insbesondere einsetzbar für Flaschen, aber auch für PET-KEG, Beutelverpackungen mit Ausgießer und dergleichen, wenn der Ausgießerhals oder Spouthals eine geeignete Halsfläche als Ansatz für das Saugelement aufweist.

Das Greifelement ist notwendigerweise mit einer Mediumquelle verbunden, so dass im Greifbereich ein Vakuum erzeugt werden kann. Mittels des Vakuums wird der Halsbereich des Behälters bzw. der PET-Flasche über den Greifbereich angesogen, so dass die durch das Vakuum erzeugte Saugkraft das sichere Halten des Behälters bewirkt.

Da die Behandlungs- und Transportmaschine nicht nur ein einziges Greifelement sondern mehrere Greifelemente aufweist, ist es günstig im Sinne der Erfindung, wenn jedes Greifelement an einer in Förderrichtung mitlaufenden Haltevorrichtung angeordnet ist. Die Haltevorrichtung weist dabei zumindest einen Fußstab auf, der kopfseitig mit einem Kopfsteg in Verbindung steht, wobei an dem Kopfsteg das Greifelement über seinen Stegbereich angeordnet ist. Der Fußstab ist fußseitig mit einem Flansch versehen, welcher mit der Behandlungs- und/oder Transportmaschine verbindbar ist, so dass eine kontinuierliche Förderung der Behälter auch in Rotationsrichtung der Maschine sichergestellt ist.

Die Behandlungs- und Transportmaschine ist in der rotierenden Bauart ausgeführt, was bedeutet, dass die Behandlung- und/oder Transportmaschine in der Ausgestaltung als Sternmaschine ausgeführt ist. Diese rotiert um eine zentrale Drehachse, wobei die Behälter am Außenumfang mittels der Greifelemente gehalten sind. Als Behandlungs- und/oder Transportmaschine kommen also beispielsweise Füllmaschinen, Behälterbehandlungsmaschinen, und/oder Transportsterne also auch sogenannte Rinser, Füller, Sterne und ggf. auch Verschließer in Betracht, wobei natürlich auch Inspektionsanlagen entsprechend ausgeführt werden könnten.

Vorteilhaft ist, dass das Greifelement bzw. der Sauggreifer den Behälter bzw. die Flasche am Greifbereich, also im Halsbereich, gleichzeitig stützt. Dies ist möglich, da der Stegbereich starr ausgeführt ist, wobei der Greifbereich beispielsweise gelenkig bzw. flexibel ausgeführt sein kann um sich an verschiedene Durchmesser des bevorzugt zylindrisch ausgeführten Halsbereiches anzupassen, so dass auch unterschiedliche Flaschengrößen bzw. Behältergrößen mit der Behandlungs- bzw. Transportmaschine transportierbar sind. Natürlich kann der Halsbereich auch in anderen geeigneten geometrischen Ausgestaltungen ausgeführt sein.

Weitere vorteilhafte Ausgestaltungen der Erfindung sind in den Unteransprüchen und der folgenden Figurenbeschreibung offenbart. Es zeigen:
Fig.1 eine prinzipielle Darstellung eines Greifelementes, welches an einer Haltevorrichtung angeordnet ist, wobei das Greifelement einen Behälter in einer ersten Ausgestaltung greift,
Fig. 2 eine Seitenansicht eines Behälters in einer weiteren Ausführung,
Fig. 3 das Greifelement aus Figur 1, welches einen Behälter nach Figur 2 greift, und
Fig. 4 eine Schnittansicht aus Figur 3.

In den unterschiedlichen Figuren sind gleiche Teile stets mit den selben Bezugszeichen versehen, weswegen dies in der Regel auch nur einmal beschrieben werden.

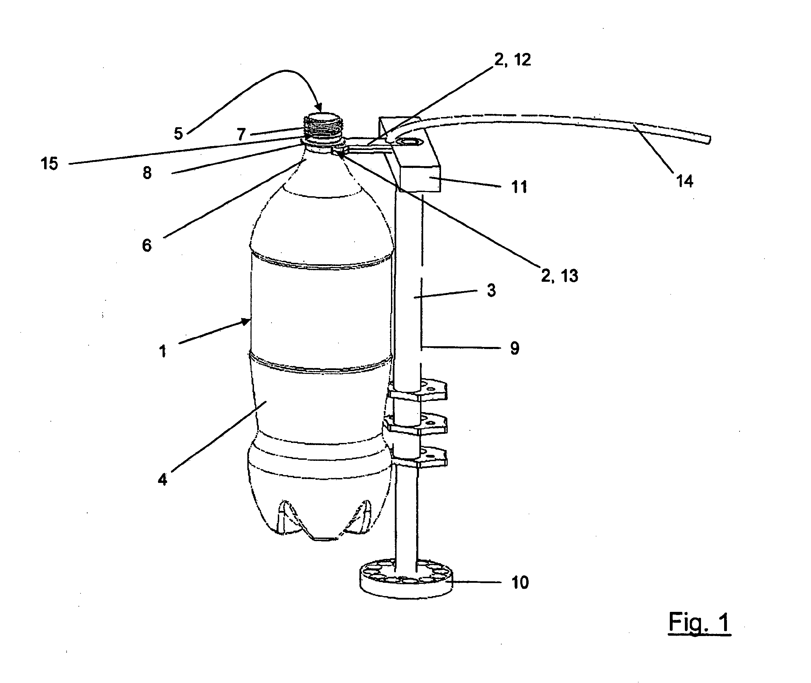

Figur 1 zeigt einen Ausschnitt einer nicht genauer dargestellten Behandlungs- und Transportmaschine, welche in rotierender Bauart Behälter 1 bzw. Flaschen z.B. zu einer ebenfalls nicht dargestellten Behandlungsmaschine, z.B. einem Füller, Rinser, Stern und gegebenenfalls Verschließer und/oder Etikettierer transportiert. Zum Halten der Behälter 1 sind Greifelemente 2 vorgesehen, welche an einer Haltevorrichtung 3 angeordnet sind.

Der Behälter 1 weist einen Bauchbereich 4, kopfseitig eine verschließbaren Mündungsöffnung 5 und einen Halsbereich 6 auf. Die Mündungsöffnung 5 hat ein Außengewinde 7 zur Aufnahme eines Schraubverschlusses. Unterhalb des Außengewindes 7 ist ein Ringflansch 8, ein so genannter Neckring 8 angeordnet. In der dargestellten Ausführung ist der Behälter 1 eine PET-Flasche.

Die Haltevorrichtung 3 weist bei der beispielhaften Ausgestaltung nach Figur 1 einen Fußstab 9 auf, der fußseitig einen Befestigungsflansch 10 und kopfseitig einen Kopfsteg 11 hat. Der Kopfsteg 11 kann auch als Quersteg 11 bezeichnet werden.

Das Greifelement 2 weist einen Stegbereich 12 und einen Greifbereich 13 auf. Der Stegbereich 12 steht einerseits mit dem Kopfsteg 11, und dazu gegenüberliegend mit dem Greifbereich 13 in Verbindung.

In den Stegbereich 12 mündet eine Verbindungsleitung 14 zu einer Mediumquelle. Die Mediumquelle kann z.B. eine Druckluftquelle sein. Der Stegbereich 12 ist als starres Hohlprofil ausgeführt. Mittels der Verbindungsleitung 14 bzw. mittels des eingeleiteten Mediums wird an dem Greifbereich 13 bezogen auf die Einleitstelle der Verbindungsleitung 14 in den Stegbereich 12 ein Vakuum bzw. ein Unterdruck erzeugt, welcher an dem Greifbereich 13 bzw. an seiner Anlagefläche einen Saugkraft erzeugt, so dass das Greifelement 2 als Sauggreifer ausgeführt ist. Hierzu weist der Greifbereich 12 mit einem Spalt beabstandete Dichtlippen auf.

Der Greifbereich 13 greift an dem Halsbereich 6 des Behälters 1, in der Zeichnungsebene gesehen unterhalb des Ringflansches 8 an. Aufgrund des Vakuums, bzw. der erzeugten Saugkraft wird der Behälter 1 nicht nur sicher in Transportrichtung gehalten, sondern von dem Greifelement 2 gleichzeitig gestützt.

In weiter bevorzugter Ausgestaltung ist der Greifbereich 13 flexibel, anpassbar an unterschiedliche Durchmesser des Halsbereiches 6 ausgeführt. Wie dargestellt, umgreift der Greifbereich 13 weniger als die Hälfte des Umfangs des Halsbereiches 6, bevorzugt etwa 25% des Umfangs. Insofern ist der Greifbereich quasi in der Art eines Kreissegmentes ausgeführt, welcher an seiner Wirkfläche, also an der zum Halsbereich 6 (Flaschenhals) weisenden Anlagefläche entsprechende Vorrichtungen zum Ansaugen hat, wie oben erwähnt. Natürlich sollen die genannten Greifbeträge lediglich beispielhaft sein, was bedeutet, dass der Greifbereich auch mehr als 50% des Umfangs des Halsbereiches 6 umgreifen kann.

Ebenfalls umfasst von der Erfindung ist auch ein Verfahren zur Halten- und Transport von Behältern (1), insbesondere Flaschen, KEG, Beutelverpackungen mit Ausgießer und dergleichen, bei welchem eine Variante der vorgenannten Behandlungs- und Transportmaschinen verwendet wird. Vorteilhafterweise werden dabei die Behälter (1) mit der Mündung nach oben transportiert. Diese senkrechte Ausrichtung wird auch beibehalten, wenn Behälter von einer Behandlungs- und Transportmaschine zur nächsten übergeben werden.

Im Einzelfall, zum Beispiel für einen Rinsschritt, ist es nötig, dass die Behälter (1) um 180° geschwenkt werden und mindestens eine Teilstrecke so ausgerichtet transportiert werden, wobei die Mündungsöffnung nach unten weist.

In dem in Figur 1 dargestellten Ausführungsbeispiel ist unterhalb des Außengewindes 7 und oberhalb des Ringflansches 8 noch eine Sicherungsnut 15 angeordnet.

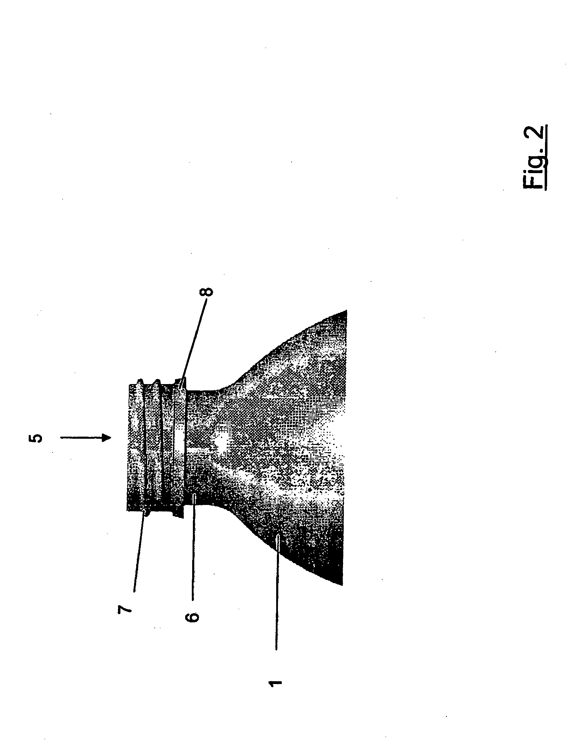

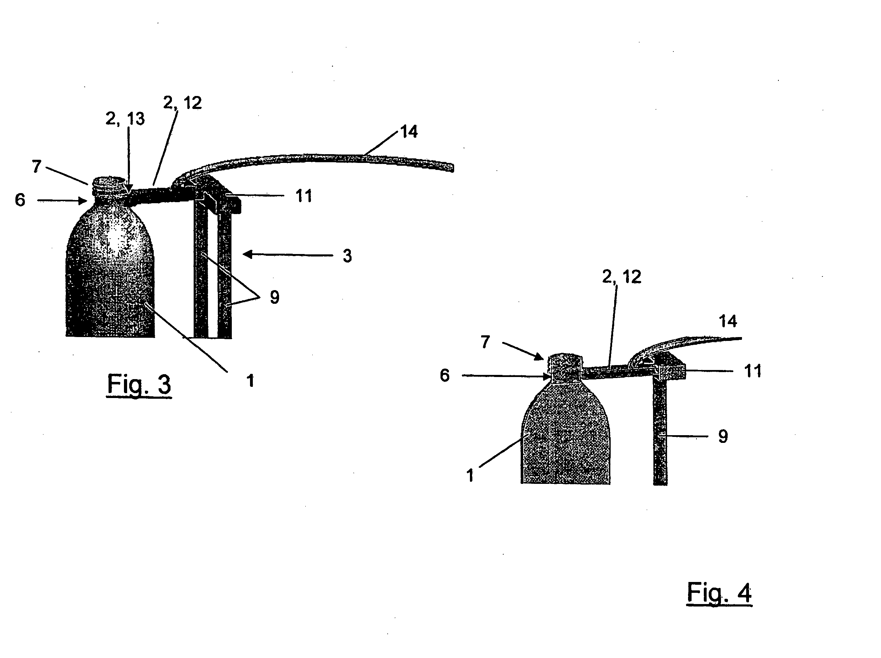

Eine weitere Ausgestaltung des Behälters 1 ist in Figur 2 dargestellt. Bei diesem Ausführungsbeispiel schließt sich der Ringflansch 8 direkt an das Außengewinde 7 an. Auf eine Sicherungsnut wurde bei diesem Ausführungsbeispiel verzichtet. Gleichwohl hat der Behälter 1 einen Halsbereich 6, an dem das Greifelement 2 mit seinem Greifbereich 13 angreifen kann, was beispielhaft in Figur 3 dargestellt ist.

Auch die Haltevorrichtung 3 ist im Unterschied zu der Ausgestaltung nach Figur 1 bei der Ausführung nach Figur 3 mit zwei sich parallel erstreckenden Fußstäben 9 ausgeführt, welche kopfseitig mit dem Kopfsteg 11 in Verbindung stehen. Nicht dargestellt ist die Verbindung der Fußstäbe 9 zur rotierenden Transport- bzw. Behälterbehandlungsmaschine.

Figur 4 zeigt eine Schnittzeichnung durch Figur 3. In Figur 4 ist deutlich erkennbar, dass der Stegbereich 12 als im Schnitt gesehen als viereckiger Hohlstab bzw. als Hohlprofil ausgeführt ist, wobei natürlich auch andere Profilausgestaltungen denkbar sind. Der Greifbereich ist in Figur 4 aufgrund des gewählten Schnittes nicht erkennbar. Erkennbar ist jedoch, dass das Greifelement 2 an dem zylindrisch ausgeführten Halsbereich 6 anliegt, wobei wesentlich ist, dass der Halsbereich 6 bzw. der Behälter 1 mittels Saugkraft an dem Greifelement 2 gehalten bzw. zu diesem gezogen wird.

### Bezugszeichenliste

- 1: Behälter
- 2: Greifelement
- 3: Haltevorrichtung
- 4: Bauchbereich
- 5: Mündungsöffnung
- 6: Halsbereich
- 7: Außengewinde
- 8: Ringflansch
- 9: Fußstab
- 10: Befestigungsflansch
- 11: Kopfsteg
- 12: Stegbereich
- 13: Greifbereich
- 14: Verbindungsleitung
- 15: Sicherungsnut

## Patentansprüche

1. Behandlungs- und Transportmaschine für Behälter (1), insbesondere Flaschen, KEG, Beutelverpackungen mit Ausgießer und dergleichen welche in rotierender Bauart um eine zentrale Drehachse rotierbar ausgeführt ist und zumindest ein Greifelement (2) zum Halten oder Greifen eines Behälters (1) aufweist, wobei der Behälter (1) einen Bauchbereich (4), kopfseitig eine verschließbare Mündungsöffnung (5) und einen Halsbereich (6) aufweist,
**dadurch gekennzeichnet, dass**
das Greifelement (2) als Sauggreifer ausgeführt ist und einen als starres Hohlprofil ausgeführten Stegbereich (12) sowie einen in der Art eines Kreissegments ausgeführten Greifbereich (13) aufweist, welcher mit einem Spalt beabstandete Dichtlippen besitzt, wobei das Greifelement (2) dazu ausgebildet ist, um mit dem Greifbereich (13) an dem Halsbereich (6) des Behälters (1) anzugreifen und durch die erzeugbare Saugkraft in eine Transportrichtung zu halten sowie gleichzeitig zu stützen.

2. Behandlungs- und Transportmaschine für Behälter (1) nach Anspruch 1.
**dadurch gekennzeichnet, dass** der Greifbereich (13) flexibel an den jeweiligen Halsbereich (6) enpassbar ausgeführt ist.

3. Behandlungs- und Transportmaschine für Behälter (1) nach einem der vorhergehenden Ansprüche, **dadurch gekennzeichnet, dass** das Greifelement (2) mit einer Mediumquelle verbunden ist.

4. Behandlungs- und Transportmaschine für Behälter (1) nach einem der vorhergehenden Ansprüche, **dadurch gekennzeichnet, dass** das Greifelement (2) an einer Haltevorrichtung (3) angeordnet ist.

5. Verfahren zur Halten- und Transport von Behältern (1), insbesondere Flaschen, KEG, Beutelverpackungen mit Ausgießer und dergleichen,
**dadurch gekennzeichnet, dass**
eine Vorrichtung nach einem der vorausgehenden Ansprüche verwendet wird, welche mit dem Greifbereich (13) des Greifelements (2) an einem Halsbereich eines Behälters angreift, so dass der Behälter durch eine erzeugbare Saugkraft an seinem Halsbereich in eine Transportrichtung gehalten sowie gleichzeitig gestützt wird.

6. Verfahren nach Anspruch 5, **dadurch gekennzeichnet, dass** die Behälter (1) mit der Mündung nach oben transportiert werden und insbesondere derart ausgerichtet von einer Behandlungs- und Transportmaschine zur nächsten übergeben werden.

7. Verfahren nach einem der Ansprüche 5 oder 6, **dadurch gekennzeichnet, dass** die Behälter (1) um 180° geschwenkt werden und mindestens eine Teilstrecke so ausgerichtet sind, dass die Mündungsöffnung nach unten weist.

## Claims

1. Handling and transporting machine for containers (1), in particular bottles, kegs, pouch packs with pourer and the like, which, in a rotary construction, is designed to be rotatable about a central rotary axis and has at least one gripping element (2) for holding or gripping a container (1), wherein the container (1) has a body region (4), at the top a closable mouth opening (5) and a neck region (6),
**characterised in that**
the gripping element (2) is designed as a suction gripper and has a web region (12) designed as a rigid hollow profile and a gripping region (13), designed in the manner of a circular segment, which possesses sealing lips distanced with a gap, wherein the gripping element (2) is designed to grip, with the gripping region (13), the neck region (6) of the container (1) and, by means of the suction force which can be generated, to hold said neck region into a transport direction and to simultaneously support said neck region.

2. Handling and transporting machine for containers (1) according to claim 1,
**characterised in that** the gripping region (13) is designed to be flexibly adaptable to the respective neck region (6).

3. Handling and transporting machine for containers (1) according to any one of the preceding claims, **characterised in that** the gripping element (2) is connected with a media source.

4. Handling and transporting machine for containers (1) according to any one of the preceding claims, **characterised in that** the gripping element (2) is arranged on a holding device (3).

5. Method for holding and transporting containers (1), in particular bottles, kegs, pouch packs with pourer and the like,
**characterised in that**
a device according to one of the preceding claims is used which, with the gripping region (13) of the gripping element (2), grips a neck region of a container so that the container, by a suction force that can be generated, is held at its neck region into a transport direction and is simultaneously supported.

6. Method according to claim 5, **characterised in that** the containers (1) are transported with the mouth upwards and, in particular, aligned thus, are transferred from a handling and transporting machine to the next one.

7. Method according to one of the claims 5 or 6, **characterised in that** the containers (1) are pivoted by 180° and, at least for a partial section, are aligned such that the mouth opening points downwards.

## Revendications

1. Machine de traitement et de transport pour récipients (1), en particulier pour bouteilles, fûts, sachets d'emballage avec bec verseur et similaires, qui est réalisée du type rotatif de manière à pouvoir tourner autour d'un axe de rotation central et présente au moins un élément de préhension (2) pour la retenue ou la préhension d'un récipient (1), le récipient (1) présentant une zone ventrale (4), côté tête une ouverture de goulot (5) refermable et une zone de col (6), **caractérisée en ce que** l'élément de préhension (2) est réalisé comme une pince aspirante et présente une zone de nervure (12) réalisée comme un profilé creux rigide, ainsi qu'une zone de préhension (13) réalisée comme un segment circulaire, laquelle possède des lèvres d'étanchéité espacées par une fente, l'élément de préhension (2) étant réalisé afin d'agir avec la zone de préhension (13) sur la zone de col (6) du récipient (1) et afin de maintenir et de soutenir ce dernier simultanément par la force d'aspiration pouvant être générée dans un sens de transport.

2. Machine de traitement et de transport pour récipients (1) selon la revendication 1, **caractérisée en ce que** la zone de préhension (13) est réalisée de sorte à être adaptable de manière flexible à la zone de col (6) respective.

3. Machine de traitement et de transport pour récipients (1) selon l'une quelconque des revendications précédentes, **caractérisée en ce que** l'élément de préhension (2) est relié à une source de produit.

4. Machine de traitement et de transport pour récipients (1) selon l'une quelconque des revendications précédentes, **caractérisée en ce que** l'élément de préhension (2) est disposé sur un dispositif de retenue (3).

5. Procédé de retenue et de transport pour récipients (1), en particulier bouteilles, fûts, sachets d'emballage avec bec verseur et similaires,
**caractérisé en ce**
**qu'**un dispositif selon l'une quelconque des revendications précédentes est utilisé, lequel agit avec la zone de préhension (13) de l'élément de préhension (2) sur une zone de col d'un récipient de sorte que le récipient soit maintenu et simultanément soutenu par une force d'aspiration pouvant être générée sur sa zone de col dans un sens de transport.

6. Procédé selon la revendication 5, **caractérisé en ce que** les récipients (1) sont transportés avec le goulot vers le haut et transmis en particulier orientés de la sorte d'une machine de traitement et de transport à la machine suivante.

7. Procédé selon l'une quelconque des revendications 5 ou 6, **caractérisé en ce que** les récipients (1) sont pivotés de 180° et sont orientés sur au moins une section de trajet de sorte que l'ouverture de goulot soit dirigée vers le bas.
